# EUROPEAN PATENT SPECIFICATION

(11) **EP 2 286 137 B1**
(45) Date of publication and mention of the grant of the patent: **18.06.2014**
(21) Application number: 09763583.3
(22) Date of filing: 11.06.2009
(51) Int. Cl.: F16L 59/02, F16L 59/10, F16L 59/00

(54) **NON-WOVEN, SELF-WRAPPING THERMAL SLEEVE**
SELBSTWICKELNDE VLIES-WÄRMEUMHÜLLUNG
MANCHON THERMIQUE AUTO-ENVELOPPANT NON TISSÉ

(30) Priority: 10.06.2009 US 481670; 12.06.2008 US 60894
(43) Date of publication of application: 23.02.2011
(73) Proprietor: Federal-Mogul Powertrain, Inc., Southfield, MI 48033 (US)
(72) Inventor: HARRIS, David, A., Coatesville PA 19320 (US)
(74) Representative: Barker, Rosemary Anne
(86) International application number: PCT/US2009/046984
(87) International publication number: WO 2009/152293

(56) References cited:
- JP-A- 9 269 098
- JP-A- 2007 146 964
- KR-A- 20030 011 934
- KR-A- 20050 092 673
- KR-A- 20070 100 207
- KR-Y1- 200 299 419
- US-A1- 2004 219 846
- US-B1- 6 329 602

## Description

### CROSS-REFERENCE TO RELATED APPLICATION

This application claims the benefit of U.S. Provisional Application Serial No. 61/060,894, filed June 12, 2008.

### BACKGROUND OF THE INVENTION

### 1. Technical Field

This invention relates generally to sleeves for protecting elongate members, and more particularly to non-woven, self-wrapping thermal sleeves.

### 2. Related Art

It is known that wires and wire harnesses carried in sleeves in vehicles, such as in automobiles, aircraft or aerospace craft, can be routed through areas subjected to relatively high heat while in use. As such, it is customary to spirally wrap wires and wire harnesses with high temperature resistant foil tape to reduce the potential for heat damage to the wires. Unfortunately, applying tape is labor intensive, and thus, costly. In addition, the appearance of the tape can be unsightly, particularly over time as the tape wears, which in turn, can result in the wires being partially exposed. Further, in service, tape can provide difficulties in readily accessing the wound wires.

Other than applying tape, it is known to provide sleeves in the form of woven, braided or knitted fabric sleeves about the wires to reduce the potential for heat damage to the wires. The sleeves are typically manufactured from heat resistant materials, such as selected monofilament and multifilament yarns. The sleeves are either wrapped and fastened about the wires, or applied as a self wrapping sleeve construction. Further, it is known to provide non-woven sleeves having a non-woven layer and an outer reflective layer, wherein the sleeves are not self-wrappable, and are either wrapped and fastened about the wires with a secondary fastening device, or supplied as a tubular, non-wrappable sleeve. If wrapped and fastened, additional costs are incurred for the fasteners and in attaching the fasteners to the sleeves. If tubular and non-wrappable, installation problems can arise. Further, additional labor and/or processes are typically involved to secure the sleeves about the wires. As such, although these sleeves generally prove useful in protecting the wires from exposure to heat in use, they can be relatively costly to manufacture, given that they are woven, knitted or braided, with additional costs being incurred to attach fasteners to the sleeves and to secure the sleeves about the wires.

A non-woven, self-wrapping thermal sleeve manufactured according to the present invention overcomes or greatly minimizes any limitations of the art described above.

### SUMMARY OF THE INVENTION

One aspect of the invention provides a self-wrapping, non-woven thermal sleeve for routing and protecting elongate members from exposure to external heat. The sleeve has an elongate, non-woven substrate with opposite sides that are self-wrapping about a longitudinal axis to define a generally tubular cavity in which the elongate members are received. An outermost reflective layer is applied over an outer surface of the non-woven substrate. The opposite sides of the substrate are extendible away from one another under an externally applied force to allow the elongate members to be disposed radially into the cavity. Upon disposing the elongate members within the cavity, the external force is released, thereby allowing the opposite sides of the wall to return to their self-wrapped, tubular configuration. The outermost reflective layer is biased by the substrate to substantially encapsulate the wires circumferentially about the cavity.

According to the invention, the non-woven material forming the substrate of the sleeve has low melt or bi-component fibers mixed with standard thermoplastic fibers. The bi-component or low melt fibers, when subjected to a heat treatment, take on a heat set configuration, thereby biasing the substrate to a self-curled memory position. The standard thermoplastic fibers act in part to provide the desired density and thickness to the substrate, as desired, thereby providing additional thermal protection and rigidity to the sleeve. Accordingly, the substrate is constructed having a suitable thickness and density of mechanically intertwined, non-woven standard thermoplastic fibers and low melt or bi-component fibers that act as a thermal barrier, while also being heat biased and self-curled into a tubular shape.

According to another aspect of the invention, the type, quantity, size and ratio of the non-woven standard thermoplastic fibers and low melt or bi-component fibers of the non-woven substrate can be selected to provide the sleeve with the desired stiffness, springback bias of the heat set curl, hand or softness, thermal heat resistance, and substrate density and thickness.

According to another aspect of the invention, the outermost reflective layer can be provided as a metalized film or a metal foil layer having an adhesive for adhesion to the outer surface of the substrate.

According to another aspect of the invention, the outermost reflective layer can be provided to extend completely circumferentially about the substrate to circumferentially encapsulate the substrate, thereby providing complete circumferential thermal protection to the enclosed wires while also maintaining the sleeve in a closed configuration while in use.

According to yet another aspect of the invention, the sleeve can have a foil tape applied over a seam extending along the length of the sleeve to circumferentially encapsulate the substrate with a continuous reflective foil layer to provide complete circumferential thermal protection to the enclosed wires and to maintain the sleeve in a circumferentially closed configuration while in use.

### BRIEF DESCRIPTION OF THE DRAWINGS

These and other aspects, features and advantages of the invention will become readily apparent to those skilled in the art in view of the following detailed description of presently preferred embodiments and best mode, appended claims, and accompanying drawings, in which:
Figure 1 is a perspective view of a non-woven, self-wrapping thermal sleeve constructed in accordance with one aspect of the invention carrying and protecting elongate members therein;
Figure 2 is an enlarged end view of the sleeve of Figure 1;
Figure 3 is an enlarged end view of a sleeve constructed in accordance with another aspect of the invention;
Figure 4 is an enlarged end view of a sleeve constructed in accordance with another aspect of the invention;
Figure 5 is an enlarged end view of a sleeve constructed in accordance with another aspect of the invention; and
Figure 6 is an enlarged end view of a sleeve constructed in accordance with yet another aspect of the invention.

### DETAILED DESCRIPTION OF PRESENTLY PREFERRED EMBODIMENTS

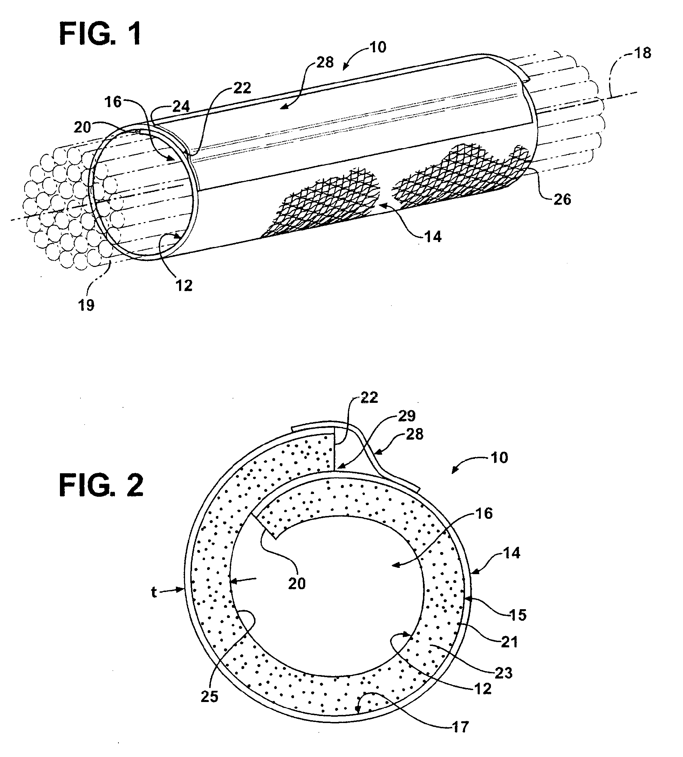

Referring in more detail to the drawings, Figure 1 shows a non-woven, self-wrapping thermal sleeve, referred to hereafter as sleeve 10, constructed in accordance with one aspect of the invention. The sleeve 10 has an inner non-woven substrate layer, referred to hereafter as wall 12, constructed from an engineered non-woven material and an outer-most reflective layer 14 applied over an outer surface 15 (Figure 2) of the wall 12. The wall 12 is heat-set into a self-wrapping tubular configuration to provide an enclosed tubular inner cavity 16 when in its relaxed, self-wrapped configuration. The cavity 16 is readily accessible along a longitudinal axis 18 of the sleeve 10 so that elongate members, such as wires 19 or a wire harness, for example, can be readily disposed radially into the cavity 16, and conversely, removed from the cavity 16, such as during service. The wall 12 can be constructed having any suitable size, including length, diameter and wall thickness, and can also be provided having a desired density, depending on the ratio of the constituents used to form the non-woven wall 12. The reflective layer 14 can be provided as a film/foil laminate, such as 1/3mil foil-laminating adhesive-1/2mil metalized PET film, for example. As such, the foil provides reflectivity and the PET film provides durability in use. Otherwise, other reflective materials could be used, including a single metal foil layer, for example. The reflective layer 14 can be attached to the wall 12 in any suitable fashion, such as by any suitable adhesive, including heatseals or an intermediate pressure sensitive adhesive, represented in Figure 2 generally at 17, for example. The reflective layer 14 provides enhanced thermal protection to the wires 19 and can also facilitate maintaining the sleeve 10 in its wrapped tubular configuration about the wires 19 in use.

The sleeve 10 can be constructed having any desired length and various finished wall thicknesses (t). The non-woven material forming the wall 12 has low melt (single homogenous material) or bi-component fibers represented generally at 21 preferably mixed with standard thermoplastic fibers represented generally at 23. However, it is contemplated that the non-woven material forming the wall 12 could be constructed entirely of the low melt or bi-component fibers 21. The low melt (melt at a temperature lower than the standard thermoplastic fibers 23) or bi-component fibers 21, when heat treated in a heat-setting process, take on a heat-set configuration, thereby biasing the wall 12 into a self-curled memory tubular shape. The bi-component fibers 21 can be provided having a core of a standard thermoplastic material, such as polyethylene terephthalate (PET), for example, with an outer sheath of polypropylene, polyethylene, or low melt polyester, for example. The standard thermoplastic fibers 23 can be provided as any thermoplastic fiber, such as PET, for example, and act in part to provide the desired density and thickness (t) to the wall 12, as desired, thereby providing additional thermal protection and rigidity to the sleeve 10, while also being relatively inexpensive compared to the heat-settable fibers 21. Accordingly, the substrate 12 is constructed having a suitable thickness and density of the low melt or bi-component fibers 21 preferably combined with the standard thermoplastic fibers 23, depending on the application, while also being biased to self-curl, at least initially and prior to use, into a tubular shape. The construction of the non-woven material can be processed utilizing any mechanism of mechanically intertwining the fibers (e.g.needlepunching), chemically bonding the fibers together (e.g. glue the fibers together), or thermally bonding the fibers together (e.g. at least partially melting the fibers together via heating and cooling).

The type, quantity, size and ratio of the low melt or bi-component fibers 21 and non-woven standard thermoplastic fibers 23 of the non-woven substrate 12 can be varied, and thus selected to provide the sleeve 10 with the desired stiffness, springback bias of the heat set curl, hand (softness), thermal heat resistance, and substrate density and overall thickness (t). As such, depending on the application, the sleeve 10 can be constructed having a relatively small outer diameter, while still providing an inner surface 25 of suitable inner diameter to provide the cavity 16 with sufficient volume to contain a predetermined lateral cross-sectional area of wires. If the application is more severe, wherein the sleeve is exposed to extreme heat and/or debris, then the thickness (t) of the wall 12 can be increased. In addition, increasing the wall thickness (t) typically provides the sleeve 10 with more rigidity, and thus, larger cavities 16 can be constructed while still providing the sleeve 10 with adequate rigidity and strength to contain increased numbers and diameters of wire.

The wall 12 has opposite sides 20, 22 extending along and generally parallel to the axis 18 that terminate at opposite ends 24, 26. When the wall 12 is in its self-wrapped tubular configuration, generally free from any externally applied forces, the sides 20, 22 can overlap one another at least slightly to fully enclose the cavity 16, and thus, provide enhanced protection to the wires 19 contained in the cavity 16. The sides 20, 22 are readily extendable away from one another under an externally applied force to at least partially open and expose the cavity 16. Accordingly, the wires 19 can be readily disposed into the cavity 16 during assembly or removed from the cavity 16 during service. Upon releasing the externally applied force, the sides 20, 22 return automatically to their natural, overlapping self-wrapped position.

As shown in Figure 2, the reflective layer 14 can be provided having the same width as the wall 12 and can be attached in alignment with the wall 12 to substantially cover the entire width of the wall 12 without extending beyond the sides 20, 22. Accordingly, the outer circumference of the wall 12 can be covered or substantially covered by the reflective layer 14. Further, the reflective layer 14 can be provided having the same length as the wall 12, and thus, can cover or substantially cover the entire outer surface 15 of the wall 12, thereby leaving no or substantially no exposed areas of the wall outer surface 15 to the outside environment.

As best shown in Figure 2, to further enhance the thermal protection provided by the sleeve 12, a supplemental closure member or mechanism, such as reflective layer of foil tape 28, for example, can be adhered to traverse a seam 29 extending along and generally parallel to the axis 18 between the opposite sides 20, 22 of the wall 12. The foil tape 28 ensures that the underlying wall 12, and thus the wires 19, are fully encapsulated and sealed circumferentially by the reflective surfaces provided by the reflective layer 14 and the reflective tape 28. In addition, the foil tape 28 acts to maintain the sleeve 10 in its circumferentially closed configuration in use by being adhered adjacent the opposite sides 20, 22 of the wall 12 and thus, prevents the opposite sides 20, 22 from inadvertently opening circumferentially way from one another. As such, even in applications having heat great enough to cause the fibers 21 in the wall 12 to loose their self-curled bias, the foil tape 28 maintains the wall 12 in its tubular, closed configuration.

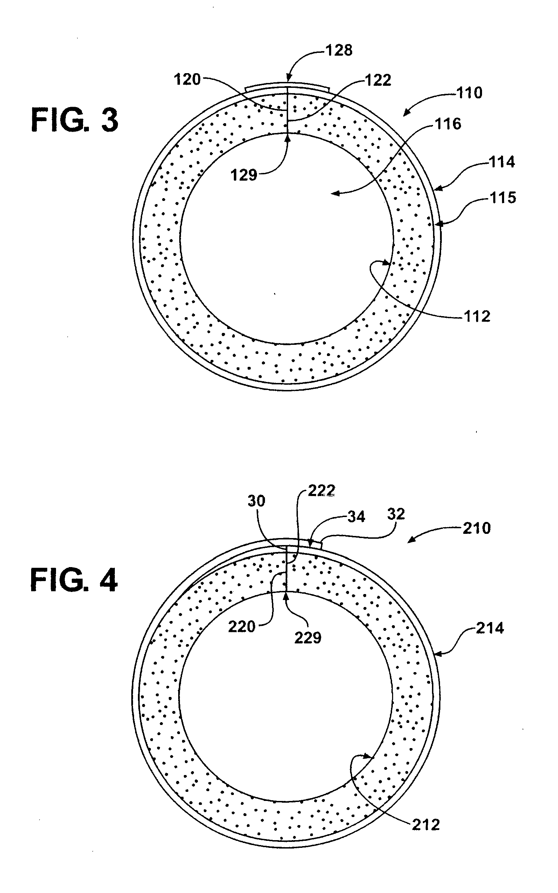

In Figure 3, a sleeve constructed in accordance with another aspect of the invention is shown generally at 110, wherein the same reference numerals used above offset by a factor of 100 indicate similar features discussed above. The sleeve 110 has a wall 112 with opposite sides 120, 122 configured to substantially abut one another to form a butt-type seam or joint upon being wrapped about elongate members, rather than overlapping one another as with the sleeve 10. An outer reflective layer 114 is provided having the same width as the wall 112 and is attached in alignment and generally flush with the sides 120, 122 of the wall 12 to completely cover or substantially cover the entire width of the wall 112 extending between the sides 120, 122. As such, as with the sleeve 10 discussed above, an entire outer surface 115 of the wall 112 is covered or substantially covered by the reflective layer 114.

The sleeve 110 also has a reflective foil tape 128 adhered over an axially extending seam 129 formed at the butt-type joint. The tape 128 ensures that the underlying wall 112 and the elongate members or wires within the cavity 116 are fully encapsulated circumferentially by the reflective surfaces provided by the reflective layer 114 and the reflective tape 128. Accordingly, the cavity 116 is sealed from the potential ingress of contamination, as well as being fully shielded from external heat radiation. Further, as with the sleeve 10, the reflective tape 128 also maintains the sleeve 110 in its circumferentially closed configuration in use, even if the wall 112 looses its initially heat-set bias.

In Figure 4, a sleeve constructed in accordance with another aspect of the invention is shown generally at 210, wherein the same reference numerals used above offset by a factor of 200 indicate similar features discussed above. The sleeve 210 has a wall 212 with opposite sides 220, 222 configured to substantially abut one another, similarly as describe above with regard to the wall 112, upon being wrapped about the elongate members or wires. An outer reflective layer 214 is provided having a width that is greater than the width extending between the sides 220, 220 of the wall 212. One side 30 of the reflective layer 214 is attached in substantial alignment with one side 220 of the wall 212 such that it is substantially flush therewith, while an opposite side 32 of the reflective layer 214 extends circumferentially beyond the other side 222 of the wall 212. Accordingly, the portion of the reflective layer 214 extending circumferentially beyond the side 222 can be attached or adhered to an outer surface 34 of the reflective layer to completely cover the entire width of the wall 212 extending between the sides 220, 222 and to close off an axially extending seam 229 of the wall 212. If desired, a strip of release paper can be provide to cover a pressure sensitive adhesive portion of the reflective layer 214 extending beyond the side 222, until it becomes desired to expose the adhesive surface for bonding during assembly, for example. Of course, any suitable adhesive or attachment mechanism is considered to be within the scope of the invention, such as hook and loop fasteners, for example.

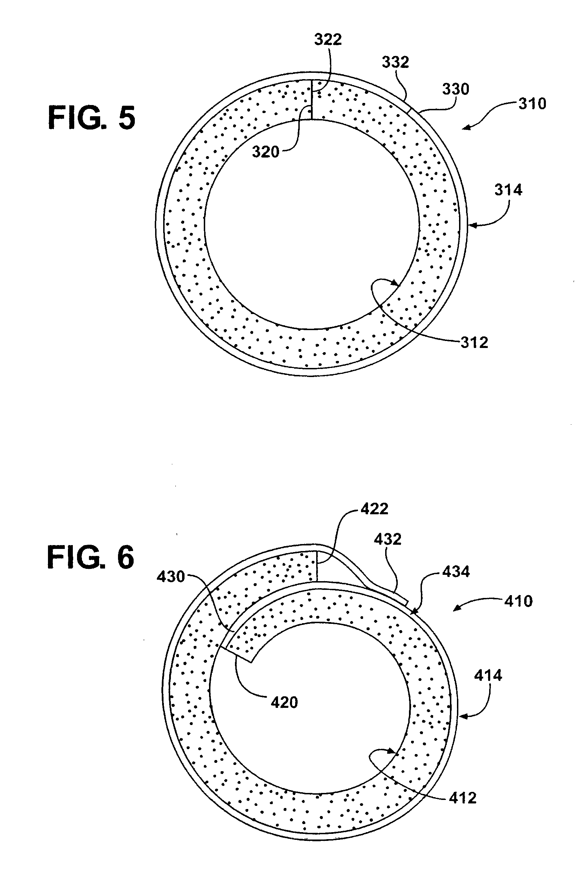

In Figure 5, a sleeve constructed in accordance with another aspect of the invention is shown generally at 310, wherein the same reference numerals used above offset by a factor of 300 indicate similar features discussed above. The sleeve 310 has a wall 312 with opposite sides 320, 322 configured to substantially abut one another, similarly as describe above with regard to the wall 112, upon being wrapped about the elongate members or wires. An outer reflective layer 314 is provided having substantially the same width as the wall 312, however unlike the sleeve 110 in Figure 3, the width of the reflective layer 314 is attached misaligned (staggered) relative to the width of the wall 312. As such, one side 330 of the reflective layer 314 is misaligned (staggered) with the side 320 of the wall, such that the side 330 of the reflective layer is adhered circumferentially inwardly of the side 320 of the wall 312, thereby leaving an exposed outer surface of the wall 312. Meanwhile, another side 332 of the reflective layer 314 extends circumferentially beyond the other side 322 of the wall 312 in staggered relation thereto. Accordingly, the portion of the reflective layer 314 extending beyond the side 322 can be adhered to the exposed outer surface of the wall 312 during assembly such that the opposite sides 330, 332 of the reflective layer 314 are brought into abutment or substantial abutment with one another to completely or substantially cover the entire width of the wall 312. Further, upon being fully assembled, the reflective layer 314 maintains the wall 312 in its circumferentially closed configuration. It should be recognized that the width of the reflective outer layer 314 could be slightly greater than the width of the wall 312, if desired, thereby providing some overlap of the reflective outer layer 314 on itself upon assembly.

In Figure 6, a sleeve constructed in accordance with another aspect of the invention is shown generally at 410, wherein the same reference numerals used above offset by a factor of 400 indicate similar features discussed above. The sleeve 410 has a wall 412 with opposite sides 420, 422 configured to circumferentially overlap one another upon being wrapped about the elongate members or wires in "cigarette" type fashion. An outer reflective layer 414 is provided having a width that is greater than the width extending between the sides 420, 422 of the wall 412. One side 430 of the reflective layer 414 is attached in alignment or substantial alignment with one side 420 of the wall 412 such that it is flush or substantially flush therewith, while an opposite side 432 of the reflective layer 414 extends circumferentially beyond the other side 422 of the wall 412 to provide a flap portion. Accordingly, the flap portion of the reflective layer 414 extending beyond the side 422 can be attached, such as by being adhered, for example, to a outer surface 434 of the reflective layer 414 to completely cover the entire circumferential width of the wall 412 extending between the sides 420, 422. If desired, a strip of release paper can be provided to cover an adhesive portion of the reflective layer 414 extending beyond the side 422, until it becomes desired to expose the adhesive surface for bonding during assembly.

It is to be understood that other embodiments of the invention which accomplish the same function are incorporated herein within the scope of any ultimately allowed patent claims.

## Claims

1. A self-wrapping sleeve (10; 110; 210; 310; 410) for routing and protecting elongate members (19), comprising:
a wall (12; 112; 212; 312; 412) having an outer surface with opposite sides (20, 22; 120, 122; 220, 222; 320, 322; 420, 422) extending along a longitudinal axis (18) of said sleeve, said sides being self-wrapped about said longitudinal axis to provide a tubular cavity (16, 116) in absence of an externally applied force, said sides being extendable away from one another under an externally applied force to expose said cavity for insertion of the elongate members, said sides returning to their self-wrapped configuration upon removal of the externally applied force; and
an outer reflective layer (14; 114; 214; 314; 414) attached to said outer surface of said wall, **characterised in that** said wall comprises a layer of non-woven thermoplastic material consisting of low melt or bi-component fibres (21) or having low melt or bi-component fibres (21) mixed with standard thermoplastic fibres.

2. The self-wrapping, non-woven sleeve of claim 1, wherein said outer reflective layer (12; 112; 312) extends completely about an outer circumference of said wall.

3. The self-wrapping, non-woven sleeve (10; 110; 310) of claim 1, wherein said non-woven wall (12; 112; 312) has an unwrapped width extending between said opposite sides (20, 22; 220, 222; 320, 322) and said outer reflective layer (14; 114; 314) has a width substantially the same as said width of said non-woven wall.

4. The self-wrapping, non-woven sleeve (310) of claim 3, wherein said reflective layer (314) has opposite sides extending along the longitudinal axis (18) of said sleeve, said opposite sides of said reflective layer (314) being staggered circumferentially in relation to said opposite sides (320, 322) of said wall.

5. The self-wrapping, non-woven sleeve (310) of claim 4, wherein said opposite sides of said reflective layer (14; 114) are substantially aligned with said opposite sides (20, 22; 120, 122) of said wall (12; 122).

6. The self-wrapping, non-woven sleeve (10; 110) of claim 3, wherein said opposite sides of said reflective layer (14; 114) are substantially aligned with said opposite sides (20, 22; 120, 122) of said wall (12, 112).

7. The self-wrapping, non-woven sleeve (10) of claim 6, wherein said opposite sides (20, 22) of said wall (12) overlap one another to provide a seam (29) extending between said opposite sides in absence of an externally applied force.

8. The self-wrapping, non-woven sleeve (110) of claim 6, wherein said opposite sides (120, 122) of said wall (112) substantially abut one another to provide a seam (129) extending between said opposite sides in absence of an externally applied force.

9. The self-wrapping, non-woven sleeve of claim 7 or claim 8, further comprising a closure member (28; 128) attached to said reflective layer (14; 114) and overlying said seam (29; 129).

10. The self-wrapping, non-woven sleeve (210; 410) of claim 1, wherein said non-woven wall (212; 412) has an unwrapped width extending between said opposite sides (220, 222; 420, 422) and said outer reflective layer (214; 414) has a width greater than said width of said non-woven wall.

11. The self-wrapping, non-woven sleeve (210; 410) of claim 10, wherein said reflective layer (214; 414) has opposite sides extending along the longitudinal axis of said sleeve, one of said opposite sides of said reflective layer being attached adjacent one of said opposite sides of said wall.

12. The self-wrapping, non-woven sleeve (210) of claim 11, wherein said opposite sides (220, 222) of said wall (212) substantially abut one another to provide a seam (229) extending between said opposite sides in absence of an externally applied force.

13. The self-wrapping, non-woven sleeve (210; 410) of claim 11, wherein said opposite sides of said reflective layer (214; 414) overlap one another.

14. The self-wrapping, non-woven sleeve (210; 410) of claim 13, wherein a radially outermost one of said opposite sides of said reflective layer (214; 414) is attached to an outer surface of said reflective layer.

15. The self-wrapping, non-woven sleeve of claim 1, wherein said non-woven elongate wall is constructed of a first polymeric material and a second polymeric material, said first polymeric material having a different melt temperature than said second polymeric material.

## Patentansprüche

1. Selbstwickelnde Hülle (10; 110; 210; 310; 410) zum Führen und Schützen von langgestreckten Teilen (19) die umfasst:
eine Wand (12; 112; 212; 312; 412), die über eine äußere Oberfläche mit gegenüberliegende Seiten (20, 22; 120, 122; 220, 222; 320, 322; 420, 422) verfügt, die sich entlang einer Längsachse (18) der Hülle erstrecken, wobei die Seiten um die Längsachse selbstgewickelt sind, um in Abwesenheit einer extern angewendeten Kraft einen röhrenförmigen Hohlraum (16, 116) zur Verfügung zu stellen, wobei die Seiten unter einer extern angewendeten Kraft voneinander weg ausziehbar sind, um den Hohlraum zum Einsetzen der langgestreckten Teile zu exponieren, wobei die Seiten nach Entfernen der extern aufgewendeten Kraft in ihre selbstgewickelte Konfiguration zurückkehren; und
eine äußere reflektierende Schicht (14; 114; 214; 314; 414), die an der äußeren Oberfläche der Wand befestigt ist, **dadurch gekennzeichnet, dass** die Wand eine Schicht aus einem thermoplastischen Vliesmaterial umfasst, das aus Fasern mit niedrigem Schmelzpunkt oder Bikomponentenfasern (21) besteht oder über Fasern mit niedrigem Schmelzpunkt oder Bikomponentenfasern (21) verfügt, die mit thermoplastischen Standardfasern gemischt sind.

2. Selbstwickelnde Vlieshülle gemäß Anspruch 1, wobei sich die äußere reflektierende Schicht (12; 112; 312) vollständig über einen äußeren Umfang der Wand erstreckt.

3. Selbstwickelnde Vlieshülle (10; 110; 310) gemäß Anspruch 1, wobei die Vlieswand (12; 112; 312) über eine ungewickelte Breite verfügt, die sich zwischen den gegenüberliegenden Seiten (20, 22; 220, 222; 320, 322) erstreckt, und die äußere reflektierende Schicht (14; 114; 314) über eine Breite verfügt, die im Wesentlichen die selbe wie die Breite der Vlieswand ist.

4. Selbstwickelnde Vlieshülle (310) gemäß Anspruch 3, wobei die reflektierende Schicht (314) über gegenüberliegende Seiten verfügt, die sich entlang der Längsachse (18) der Hülle erstrecken, wobei die gegenüberliegenden Seiten der reflektierenden Schicht (314) umlaufend in Bezug auf die gegenüberliegenden Seiten (320, 322) der Wand versetzt angeordnet sind.

5. Selbstwickelnde Vlieshülle (310) gemäß Anspruch 4, wobei die gegenüberliegenden Seiten der reflektierenden Schicht (14; 114) im Wesentlichen mit den gegenüberliegenden Seiten (20, 22; 120, 122) der Wand (12; 122) ausgerichtet sind.

6. Selbstwickelnde Vlieshülle (10; 110) gemäß Anspruch 3, wobei die gegenüberliegenden Seiten der reflektierenden Schicht (14; 114) im Wesentlichen mit den gegenüberliegenden Seiten (20, 22; 120, 122) der Wand (12, 112) ausgerichtet sind.

7. Selbstwickelnde Vlieshülle (10) gemäß Anspruch 6, wobei die gegenüberliegenden Seiten (20, 22) der Wand (12) miteinander überlappen, um eine Naht (29) zur Verfügung zu stellen, die sich in Abwesenheit einer extern angewendeten Kraft zwischen den gegenüberliegenden Seiten erstreckt.

8. Selbstwickelnde Vlieshülle (110) gemäß Anspruch 6, wobei die gegenüberliegenden Seiten (120, 122) der Wand (112) im Wesentlichen aneinander grenzen, um eine Naht (129) zur Verfügung zu stellen, die sich in Abwesenheit einer extern angewendeten Kraft zwischen den gegenüberliegenden Seiten erstreckt.

9. Selbstwickelnde Vlieshülle gemäß Anspruch 7 oder Anspruch 8, die weiterhin ein Verschlussteil (28; 128) umfasst, das an der reflektierenden Schicht (14; 114) befestigt ist und auf der Naht (29; 129) aufliegt.

10. Selbstwickelnde Vlieshülle (210; 410) gemäß Anspruch 1, wobei die Vlieswand (212; 412) über eine ungewickelte Breite verfügt, die sich zwischen den gegenüberliegenden Seiten (220, 222; 420, 422) erstreckt, und die äußere reflektierende Schicht (214; 414) über eine Breite verfügt, die größer als die Breite der Vlieswand ist.

11. Selbstwickelnde Vlieshülle (210; 410) gemäß Anspruch 10, wobei die reflektierende Schicht (214; 414) über gegenüberliegende Seiten verfügt, die sich entlang der Längsachse der Hülle erstrecken, wobei eine der gegenüberliegenden Seiten der reflektierenden Schicht angrenzend an eine Seite der gegenüberliegenden Seiten der Wand befestigt ist.

12. Selbstwickelnde Vlieshülle (210) gemäß Anspruch 11, wobei die gegenüberliegenden Seiten (220, 222) der Wand (212) im Wesentlichen aneinandergrenzen, um eine Naht (229) zur Verfügung zu stellen, die sich in Abwesenheit einer extern angewendeten Kraft zwischen den gegenüberliegenden Seiten erstreckt.

13. Selbstwickelnde Vlieshülle (210; 410) gemäß Anspruch 11, wobei sich die gegenüberliegenden Seiten der reflektierenden Schicht (214; 414) gegenseitig überlappen.

14. Selbstwickelnde Vlieshülle (210; 410) gemäß Anspruch 13, wobei eine äußerst radial angeordnete Seite der gegenüberliegenden Seiten der reflektierenden Schicht (214; 414) an einer äußeren Oberfläche der reflektierenden Schicht befestigt ist.

15. Selbstwickelnde Vlieshülle gemäß Anspruch 1, wobei die langgestreckte Vlieswand aus einem ersten polymeren Material und einem zweiten polymeren Material gebildet wird, wobei das erste polymere Material über eine Schmelztemperatur verfügt, die von der des zweiten polymeren Materials verschieden ist.

## Revendications

1. Manchon auto-enveloppant (10 ; 110 ; 210 ; 310 ; 410) pour acheminer et protéger des éléments allongés (19), comprenant :
une paroi (12 ; 112 ; 212 ; 312 ; 412) ayant une surface externe avec des côtés opposés (20, 22 ; 120, 122 ; 220, 222 ; 320, 322 ; 420, 422) s'étendant le long d'un axe longitudinal (18) dudit manchon, lesdits côtés s'enroulant automatiquement autour dudit axe longitudinal pour fournir une cavité tubulaire (16, 116) en l'absence d'une force appliquée extérieurement, lesdits côtés pouvant s'étendre à distance les uns des autres sous une force appliquée extérieurement afin d'exposer ladite cavité pour l'insertion des éléments allongés, lesdits côtés revenant à leur configuration auto-enveloppante suite à la suppression de ladite force appliquée extérieurement ; et
une couche réfléchissante externe (14 ; 114 ; 214 ; 314 ; 414) fixée à ladite surface externe de ladite paroi, **caractérisé en ce que** ladite paroi comprend une couche de matériau thermoplastique non tissé se composant de fibres à faible point de fusion ou bicomposées (21) ou ayant des fibres à faible point de fusion ou bicomposées (21) mélangées avec des fibres thermoplastiques standard.

2. Manchon non tissé auto-enveloppant selon la revendication 1, dans lequel ladite couche réfléchissante externe (12 ; 112 ; 312) s'étend complètement autour d'une circonférence externe de ladite paroi.

3. Manchon non tissé auto-enveloppant (10 ; 110 ; 310) selon la revendication 1, dans lequel ladite paroi non tissée (12 ; 112 ; 312) a une largeur déroulée s'étendant entre lesdits côtés opposés (20, 22 ; 220, 222 ; 320, 322) et ladite couche réfléchissante externe (14 ; 114 ; 314) a une largeur sensiblement identique à ladite largeur de ladite paroi non tissée.

4. Manchon non tissé auto-enveloppant (310) selon la revendication 3, dans lequel ladite couche réfléchissante (314) a des côtés opposés s'étendant le long de l'axe longitudinal (18) dudit manchon, lesdits côtés opposés de ladite couche réfléchissante (314) étant décalés de manière circonférentielle par rapport auxdits côtés opposés (320, 322) de ladite paroi.

5. Manchon non tissé auto-enveloppant (310) selon la revendication 4, dans lequel lesdits côtés opposés de ladite couche réfléchissante (14 ; 114) sont sensiblement alignés avec lesdits côtés opposés (20, 22 ; 120, 122) de ladite paroi (12 ; 122).

6. Manchon non tissé auto-enveloppant (10 ; 110) selon la revendication 3, dans lequel lesdits côtés opposés de ladite couche réfléchissante (14 ; 114) sont sensiblement alignés avec lesdits côtés opposés (20, 22 ; 120, 122) de ladite paroi (12, 112).

7. Manchon non tissé auto-enveloppant (10) selon la revendication 6, dans lequel lesdits côtés opposés (20, 22) de ladite paroi (12) se chevauchent pour fournir une jonction (29) s'étendant entre lesdits côtés opposés en l'absence d'une force appliquée extérieurement.

8. Manchon non tissé auto-enveloppant (110) selon la revendication 6, dans lequel lesdits côtés opposés (120, 122) de ladite paroi (112) viennent sensiblement en butée les uns contre les autres afin de fournir une jonction (129) s'étendant entre lesdits côtés opposés en l'absence d'une force appliquée extérieurement.

9. Manchon non tissé auto-enveloppant selon la revendication 7 ou la revendication 8, comprenant en outre un élément de fermeture (28 ; 128) fixé à ladite couche réfléchissante (14 ; 114) et recouvrant ladite jonction (29 ; 129).

10. Manchon non tissé auto-enveloppant (210 ; 410) selon la revendication 1, dans lequel ladite paroi non tissée (212 ; 412) a une largeur déroulée s'étendant entre lesdits côtés opposés (220, 222 ; 420, 422) et ladite couche réfléchissante externe (214 ; 414) a une largeur supérieure à ladite largeur de ladite paroi non tissée.

11. Manchon non tissé auto-enveloppant (210 ; 410) selon la revendication 10, dans lequel ladite couche réfléchissante (214 ; 414) a des côtés opposés s'étendant le long de l'axe longitudinal dudit manchon, l'un desdits côtés opposés de ladite couche réfléchissante étant fixé de manière adjacente à l'un desdits côtés opposés de ladite paroi.

12. Manchon non tissé auto-enveloppant (210) selon la revendication 11, dans lequel lesdits côtés opposés (220, 222) de ladite paroi (212) viennent sensiblement en butée les uns contre les autres afin de fournir une jonction (229) s'étendant entre lesdits côtés opposés en l'absence d'une force appliquée extérieurement.

13. Manchon non tissé auto-enveloppant (210 ; 410) selon la revendication 11, dans lequel lesdits côtés opposés de ladite couche réfléchissante (214 ; 414) se chevauchent.

14. Manchon non tissé auto-enveloppant (210 ; 410) selon la revendication 13, dans lequel le côté situé radialement le plus à l'extérieur desdits côtés opposés de ladite couche réfléchissante (214 ; 414) est fixé à une surface externe de ladite couche réfléchissante.

15. Manchon non tissé auto-enveloppant selon la revendication 1, dans lequel ladite paroi allongée non tissée est construite avec un premier matériau polymère et un second matériau polymère, ledit premier matériau polymère ayant une température de fusion différente dudit second matériau polymère.
